Europäisches Patentamt

(19) European Patent Office

Office européen des brevets

(11) Publication number: **0 041 451**
**B1**

(12) **EUROPEAN PATENT SPECIFICATION**

(45) Date of publication of patent specification: **22.08.84**

(21) Application number: **81400857.9**

(22) Date of filing: **27.05.81**

(51) Int. Cl.³: **B 60 T 11/20**

(54) **Master cylinder with fast fill auxiliary chamber.**

(30) Priority: **02.06.80 US 155352**

(43) Date of publication of application:
**09.12.81 Bulletin 81/49**

(45) Publication of the grant of the patent:
**22.08.84 Bulletin 84/34**

(84) Designated Contracting States:
**DE FR GB IT**

(56) References cited:
**EP-A-0 026 718**
**GB-A-2 000 236**
**US-A-4 086 770**
**US-A-4 133 178**

(73) Proprietor: **THE BENDIX CORPORATION**
**Executive Offices Bendix Center**
**Southfield Michigan 48037 (US)**

(72) Inventor: **Gaiser, Robert F.**
**5843 Ponderosa Drive**
**Stevensville Michigan 49127 (US)**

(74) Representative: **Huchet, André et al**
**Service Brevets Bendix 44, rue François 1er**
**F-75008 Paris (FR)**

EP 0 041 451 B1

Courier Press, Leamington Spa, England.

## Description

The present invention relates to a master cylinder for automotive brake systems or the like, and more specifically to a master cylinder of the kind comprising a pair of aligned pistons slidably received in a housing bore for pressurizing hydraulic fluid within a pair of pressure chambers and communicating said pressurized fluid to respective, independent brake circuits.

In the prior art, such as illustrated for instance by U.S. Patents Nos. 4 133 178 and 4 086 770, a further, fast fill chamber between the primary piston and the housing is communicated with a reservoir via a relief and replenish valve assembly. During braking the fast fill chamber is pressurized to communicate fluid pressure to a primary pressure chamber. Above a predetermined pressure level the relief and replenish valve assembly is operable to vent the fast fill chamber to the reservoir. As long as the pressure level within the fast fill chamber remains below the predetermined value, the fluid pressure generated in the fast fill chamber is communicated to the primary pressure chamber. In order to provide the space required by the fast fill chamber, the housing bore receiving the primary piston is stepped to form a shoulder. In a similar manner, the primary piston is stepped to sealingly engage a small diameter portion of the bore and a large diameter portion of the bore. Because the primary piston is movable within the bore, the concentricity between the bore and primary piston must be maintained within a small tolerance. Consequently manufacture of the bore and primary piston in prior art fill master cylinders has required special attention during the machining operation to fit within the small tolerance specification. If the tolerance is not maintained, the primary piston and stepped bore are not concentric so that the primary piston tends to wedge in the stepped bore rather than moving freely therein.

It is an object of the present invention to overcome this drawback of known master cylinders, and more precisely, to eliminate the need for machining a stepped bore and a stepped piston while keeping the advantageous feature of a fast fill chamber, and thus to hold the manufacturing tolerances for the housing bore and primary piston within standard machining limits.

This object is achieved, according to the teaching of the present invention, and in a master cylinder of the kind comprising a housing defining a fluid reservoir and having a bore for slidably receiving a pair of aligned pistons which cooperate with each other and with the housing to define a pair of pressure chambers in fluid communication with respective brake circuits, said pressure chambers being further communicated with the fluid reservoir when said pistons are in a rest position and getting separated therefrom upon initiation of a brake application by an operator-actuated device, and further comprising a variable volume auxiliary pressure chamber ("fast fill chamber") communicated with one of said pressure chambers through one-way check valve means and with the fluid reservoir through a relief and replenish valve assembly such that the fluid trapped within said auxiliary pressure chamber gets pressurized upon initiation of a brake application and is first communicated to said one pressure chamber through said check valve means as long as a predetermined pressure level is not reached and then vented to the fluid reservoir through said relief and replenish valve assembly, thanks to the fact that the variable volume auxiliary pressure chamber comprises an internal cavity formed in one of the pistons and closed by a wall member which is held in fixed relationship with respect to the housing and which sealingly projects into said cavity so as to pressurize fluid therein when said one piston moves upon a brake application. The location of the fast fill chamber inside one of the pistons of the master cylinder thus allows using a housing bore of a constant diameter over its whole length, and eliminates the manufacturing difficulties encountered when machining a stepped bore and a stepped primary piston.

In a preferred embodiment of the invention, the wall member consists of a piston-like member having a stem portion which is held in abutting engagement with an end wall of the housing bore, said one piston is further formed with a peripheral clearance with respect to the housing bore, said peripheral clearance communicating with the auxiliary pressure chamber through an opening in said one piston, with the fluid reservoir through the relief and replenish valve assembly, and with said one pressure chamber through a lip seal carried by said one piston and acting as a check valve means.

These and other advantageous features will become readily apparent from reading the following description of two preferred embodiments, given by way of example only, and with reference to the accompanying drawings, in which:

Figure 1 is a schematic illustration of a brake system having a master cylinder constructed in accordance with the present invention shown in cross section; and

Figure 2 is a cross-sectional view of a master cylinder similar to Figure 1 but also including a proportioning and by-pass valve assembly.

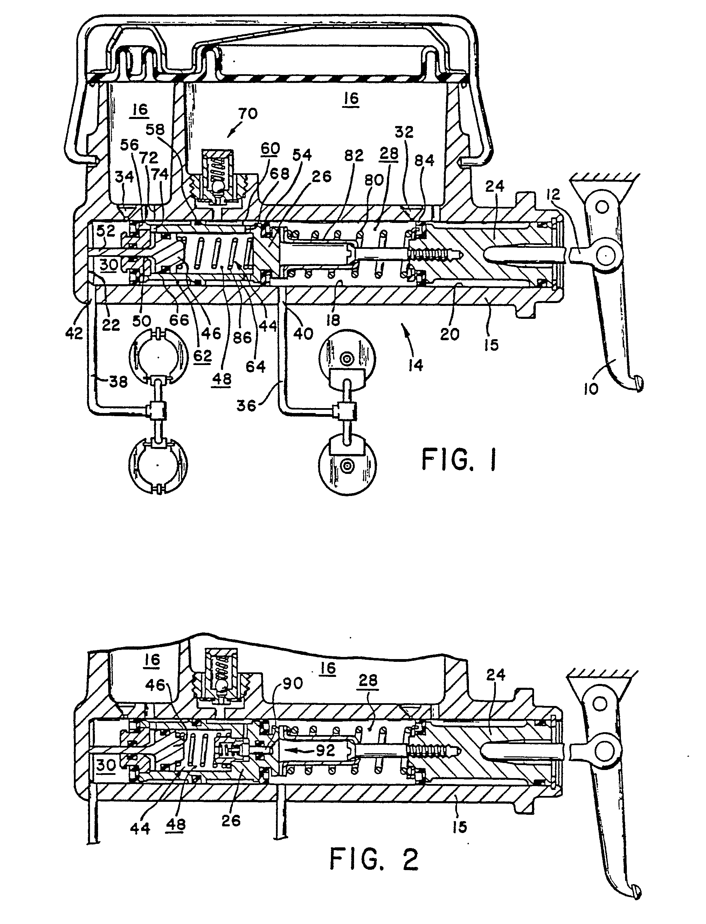

In Figure 1 the brake system includes a brake pedal 10 coupled to an input rod 12. A master cylinder 14 includes a housing 15 forming a reservoir 16 and a bore 18. The bore, which is of a substantially constant diameter, extends from an opening 20 to an end wall 22. A pair of aligned pistons 24 and 26 are movably received within the bore 18 and cooperate with the wall of the housing bore to substantially define a pair of pressure chambers 28 and 30. Each pressure chamber communicates with the reservoir 16 via a respective port 32 or 34 and also communicates with a brake circuit 36 or 38 via a respective outlet 40 or 42.

The piston 26 is provided with a cavity 44 completely disposed within the piston. A fixed wall member or piston member 46 is disposed within the cavity 44 and cooperates with the piston 26 to substantially define a variable volume auxiliary pressure chamber 48. An aperture 50 in the piston 26 receives an outwardly extending stem 52 of the member 46 which engages the housing end wall 22 within the pressure chamber 30. The piston 26 further carries lip seals 54 and 56 exposed to respective pressure chambers 28 and 30 and an intermediate seal 58 cooperating with the housing bore to separate a first clearance 60 from a second clearance 62. Each clearance is formed between the bore 18 and a respective recess on the piston 26 at 64 or 66.

The clearance 60 communicates with the auxiliary pressure chamber 48 via an opening 68 and also communicates with the reservoir 16 via a relief and replenish valve assembly 70. The clearance 62 communicates with the reservoir 16 via an opening 72 and also communicates with the cavity 44 on the left side of piston member 46 via opening 74.

The relief and replenish valve assembly 70, which forms no part of the present invention, communicates fluid from the reservoir to the bore clearance 60 and provides for restricted communication in the reverse direction below a predetermined pressure level within the clearance 60. Above this pressure level, the assembly opens to communicate the clearance 60 with the reservoir.

Referring to Figure 1, the input rod 12 is moved to the left toward the master cylinder in response to application of the pedal 10 during braking. The piston 24 is also moved to the left by the input rod 12 to contract a spring 80 carried between the piston 24 and a retainer 82 engaging the piston 26. At about the same time, the lip seal 84 carried by piston 24 closes port 32 and the contracting spring 80 forces the piston 26 to move to the left. However, the piston member 46 and stem 52 remains stationary with the stem engaging the wall 22. Fluid within the auxiliary chamber 48 is pressurized in response to contraction of the volume of the chamber. The lip seal 54 acts as a one way check valve permitting fluid communication from the clearance 60 to the chamber 28. Therefore, increasing fluid pressure within chamber 48 communicates with clearance 60, past lip seal 54 to chamber 28. The restriction provided by relief and replenish valve assembly 70 is greater initially than for lip seal 54, so that a majority of the fluid pressure within chamber 48 and clearance 60 is initially communicated to chamber 28. The opening 72, clearance 62 and opening 74 provide for communication of reservoir fluid to the left side of member 46 as the volume on this side is expanding in response to leftward movement of the piston 26 relative to the piston member 46.

With increasing fluid pressure in chamber 48 as the pistons continue to move to the left, the relief and replenish valve assembly 70 is biased to an open position to vent the clearance 60 and chamber 48 to the reservoir 16.

Upon termination of braking a spring 86 extending between the member 46 and the wall of cavity 44 biases the piston 26 to return to its rest position shown. The spring 80 also biases the piston 24 to return to its rest position. The fluid on the left side of piston member 46 returns to the reservoir via opening 74, clearance 62 and opening 72. The expansion of chamber 48 draws fluid from the reservoir via the relief and replenish valve assembly 70 to permit return of the piston 26 to its rest position.

In the alternative embodiment of Figure 2 like reference numerals refer to similar parts in Figure 1. The piston 26 of Figure 2 includes a passage 90 extending from the auxiliary chamber 48 to the pressure chamber 28. Within the passage 90 is disposed a proportioning and bypass valve assembly 92 of the kind disclosed by Applicants in their former European Application No. 80401387.8. It will be noted, however, that the master cylinder shown in this former application does not include any fast fill arrangement.

This alternative embodiment operates in the same manner as the embodiment of Figure 1, except that the proportioning and bypass valve assembly is responsive to the fluid pressure within chamber 28 to control the release of fluid pressure from the auxiliary chamber 48. As a result the fluid pressure developed in chamber 30 is less than the fluid pressure developed in chamber 28 when the pressure in the latter is above a predetermined proportioning value. Also, if chambers 28 and 48 are vented to atmosphere via a leak in circuit 36, the proportioning and bypass valve assembly remains in an open position to vent the auxiliary chamber, thereby permitting movement of piston 26 to pressurize chamber 30 in the absence of a proportioning operation by the valve assembly 92.

In both embodiments, the auxiliary chamber for "fast fill" of the pressure chamber 28 is disposed within the piston 26. Therefore, the primary piston 24 is provided with a substantially uniform outer diameter and the bore 18 from the opening 20 to the wall 22 also defines a single diameter dimension, thus appreciably simplifying the manufacture of the master cylinder.

## Claims

1. A master cylinder of the kind comprising a housing defining a fluid reservoir (16) and having a bore (18) for slidably receiving a pair of aligned pistons (24, 26) which cooperate with each other and with the housing to define a pair of pressure chambers (28, 30) in fluid communication with respective brake circuits (36, 38), said pressure chambers being further communicated with the fluid reservoir when said pistons are in a rest position and getting separated therefrom upon initiation of a brake application by an operator-actuated device, and further comprising a variable volume auxiliary pressure chamber (48) communicated with one of said pressure chambers through one-way check valve means (54) and with the fluid reservoir through a relief and replenish valve assembly (70) such that the fluid trapped within said auxiliary pressure chamber gets pressurized upon initiation of a brake application and is first communicated to said one pressure chamber through said check valve means as long as a predetermined pressure level is not reached and then vented to the fluid reservoir through said relief and replenish valve assembly, characterized in that the variable volume auxiliary pressure chamber (48) comprises an internal cavity formed in one (26) of the pistons and closed by a wall member (46) which is held in fixed relationship with respect to the housing and which sealingly projects into said cavity so as to pressurize fluid therein when said one piston moves upon a brake application.

2. A master cylinder according to claim 1, characterized in that the wall member (46) consists of a piston-like member having a stem portion (52) which is held in abutting engagement with an end wall (22) of the housing bore.

3. A master cylinder according to any of claims 1 and 2, characterized in that said one piston (26) is further formed with a peripheral clearance (60) with respect to the housing bore (18), said peripheral clearance communicating with the auxiliary pressure chamber (48) through an opening (68) in said one piston, with the fluid reservoir (16) through the relief and replenish valve assembly (70), and with said one pressure chamber (28) through a lip seal (54) carried by said one piston and acting as a check valve means.

4. A master cylinder according to claim 3, characterized in that the communication between said peripheral clearance (60) and said auxiliary pressure chamber (48) is further controlled by a proportioning valve assembly (92) which is responsive to the fluid pressure difference between said one pressure chamber (28) and said auxiliary pressure chamber (48).

**Patentansprüche**

1. Hauptzylinder mit einem Gehäuse, das einen Strömungsmittelspeicher (16) bildet und eine Bohrung (18) zur gleitenden Aufnahme von zwei zueinander ausgerichteten Kolben (24, 26) aufweist, die miteinander und mit dem Gehäuse zusammenwirken und zwei Druckkammern (28, 30) bilden, die mit entsprechenden Bremskreisen (36, 38) in Verbindung stehen und des weiteren mit dem Strömungsmittelspeicher verbunden sind, wenn sich die Kolben in einer Ruhelage befinden, und davon getrennt werden, wenn durch eine von einer Bedienungsperson betätigte Vorrichtung ein Bremsvorgang begonnen wird, und mit einer Hilfsdruckkammer (48) mit variablem Volumen, die über ein Rückschlagventiel (54) mit einer der Druckkammern und über eine Entlastungs- und Nachfüllventileinheit (70) mit dem Strömungsmittelspeicher derart in Verbindung steht, daß das in der Hilfsdruckkammer eingefangene Strömungsmittel mit dem Beginn eines Bremsvorganges unter Druck gesetzt und zuerst der einen Druckkammer über das Rückschlagventil zugeführt wird, solange wie ein vorgegebener Druck nicht erreicht wird, und danach über die Entlastungs- und Nachfüllventileinheit zum Strömungsmittelspeicher entlastet wird, dadurch gekennzeichnet, daß die Hilfsdruckkammer (48) mit variablem Volumen einen inneren Hohlraum umfaßt, der in einem (26) der Kolben ausgebildet ist und von einem Wandelement (46) umschlossen wird, das in einer festen Lage relativ zum Gehäuse gehalten wird und in abgedichteter Weise in den Hohlraum vorsteht, um darin Strömungsmittel unter Druck zu setzen, wenn sich der eine Kolben bei einem Bremmssvorgang bewegt.

2. Hauptzylinder nach Anspruch 1, dadurch gekennzeichnet, daß das Wandelement (46) aus eine kolbenähnlichen Element besteht, daß einen Schaftabschnitt (52) aufweist, der in Anlage mit einer Endwand (22) der Gehäusebohrung gehalten wird.

3. Hauptzylinder nach einem der Ansprüche 1 und 2, dadurch gekennzeichnet, daß der eine Kolben (26) des weiteren relativ zur Gehäusebohrung (18) mit einem Umfangsspalt (60) versehen ist, der über eine Öffnung (68) in den Kolben mit der Hilfsdruckkammer (48), über die Entlastungs- und Nachfüllventileinheit (70) mit dem Strömungsmittelspeicher (16) und über eine Lippendichtung (54), die von dem einen Kolben getragen wird und als Rückschlagventil wirkt, mit der einen Druckkammer (28) in Verbindung steht.

4. Hauptzylinder nach Anspruch 3, dadurch gekennzeichnet, daß die Verbindung zwischen dem Umfangsspalt (60) und der Hilfsdruckkammer (48) des weiteren durch eine Dosierventileinheit (92) gesteuert wird, die auf die Strömungsmitteldruckdifferenz zwischen der einen Druckkammer (28) und der Hilfsdruckkammer (48) anspricht.

**Revendications**

1. Un maître-cylindre du type comprenant un corps définissant un réservoir (16) à fluide et ayant un alésage (18) pour recevoir à coulissement une paire de pistons alignés (24, 26) qui coopèrent entre eux et avec le corps pour délimiter une paire de chambres de pression (28, 30) en communication fluidique avec des circuits de freins respectifs (36, 38), lesdites chambres de pression étant, en outre, mises en communication avec le réservoir à fluide lorsque lesdits pistons sont dans une position de repos et cette communication étant interrompue lors du début d'un actionnement des freins par un dispositif actionné par le conducteur, et comprenant, en outre, une chambre de pression auxiliaire (48) à volume variable mise en communication avec une première desdites chambres de pression par l'intermédiaire de moyens (54) formant clapet anti-retour et avec le réservoir à fluide par l'intermédiaire d'un ensemble de valve de décharge et de remplissage (70) de sorte que le fluide emprisonné à l'intérieur de ladite chambre de pression auxiliaire est mis sous pression au début de l'actionnement des freins et est, tout d'abord, transmis à ladite première chambre de pression par l'intermédiaire des moyens formant clapet anti-retour, tant qu'un niveau de pression prédéterminé n'est pas atteint, puis est évacué dans le réservoir à fluide par l'intermédiaire dudit ensemble de valve de décharge et de remplissage, caractérisé en ce que la chambre de pression auxiliaire (48) à volume variable comprend une cavité interne formée dans un premier (26) des pistons et fermée par un élément de paroi (46) qui est maintenu dans une disposition fixe par rapport au corps et qui fait saillie de manière étanche dans ladite cavité de façon à y mettre le fluide qu'elle contient sous pression lorsque ledit premier piston se déplace lors d'un actionnement des freins.

2. Un maître-cylindre selon la revendication 1, caractérisé en ce que l'élément de paroi (46) est constitué par un organe du type piston ayant une partie de tige (52) qui est maintenue en appui de butée contre une paroi d'extrémité (22) de l'alésage du corps.

3. Un maître-cylindre selon l'une quelconque des revendications 1 et 2, caractérisé en ce que ledit premier piston (26) est, en outre, construit avec un espace libre périphérique (60) par rapport à l'alésage (18) du corps, ledit espace libre périphérique communiquant avec la chambre de pression auxiliaire (48) par l'intermédiaire d'une ouverture (68) formée dans ledit premier piston, avec le réservoir (16) à fluide par l'intermédiaire de l'ensemble de valve de décharge et de remplissage (70) et avec ladite première chambre de pression (28) par l'intermédiaire d'un joint d'étanchéité (54) à lèvre porté par ledit premier piston et agissant comme des moyens formant clapet anti-retour.

4. Un maître-cylindre selon la revendication 3, caractérisé en ce que la communication entre l'espace libre périphérique (60) et ladite chambre de pression auxiliaire (48) est, en outre, commandée par un ensemble de valve de dosage proportionnel (92) qui est sensible à la différence de pression de fluide entre ladite première chambre de pression (28) et ladite chambre de pression auxiliaire (48).

FIG. 1

FIG. 2